# EUROPÄISCHE PATENTSCHRIFT

(11) **EP 2 529 916 B1**
(45) Veröffentlichungstag und Bekanntmachung des Hinweises auf die Patenterteilung: **05.08.2015**
(21) Anmeldenummer: 12170460.5
(22) Anmeldetag: 01.06.2012
(51) Int. Cl.: B29C 51/42, B29C 35/02, B32B 37/06, B60R 13/02, B29C 43/20

(54) **Verfahren zum Herstellen eines kaschierten Formteils**
Method for manufacturing a laminated moulded part
Procédé de fabrication d'une pièce de formage contrecollée

(30) Priorität: 01.06.2011 AT 8062011
(43) Veröffentlichungstag der Anmeldung: 05.12.2012
(73) Patentinhaber: Greiner Perfoam GmbH, 4550 Kremsmünster (AT)
(72) Erfinder: Kron, Wolfgang, 4225 Luftenberg (AT)
(74) Vertreter: Burger, Hannes

(56) Entgegenhaltungen:
- EP-A2- 0 247 344
- WO-A1-99/48670
- JP-A- 60 224 531
- US-A- 5 591 289

## Beschreibung

Die Erfindung betrifft ein Verfahren zum Herstellen von kaschierten Formteilen zumindest umfassend eine Trägerschicht aus einem ersten Schichtmaterial und eine weitere Schicht aus einem zweiten Schichtmaterial, wobei die beiden Schichtmaterialien in einem Formwerkzeug bei einer Temperatur oberhalb der Raumtemperatur miteinander verbunden werden, wobei das Werkzeug ein Oberwerkzeug und ein Unterwerkzeug umfasst, sowie ein Formwerkzeug zur Herstellung von kaschierten Formteilen zumindest umfassend eine Trägerschicht aus einem ersten Schichtmaterial und eine weitere Schicht aus einem zweiten Schichtmaterial, mit einem Oberwerkzeug und einem Unterwerkzeug.

Mehrlagige Verkleidungsteile dieser Art für Kraftfahrzeuge sind bereits aus dem Stand der Technik bekannt.

So beschreibt die AT 401 908 B ein mehrlagiges Bauelement bestehend aus einem Kern aus über einem Kunststoffschaum aus Primärmaterial verbundenen Flocken aus Kunststoffschaum und zwei auf gegenüberliegenden Oberflächen des Kerns angeordneten und mit diesen kraft- und formschlüssig verbundenen Deckschichten mit einem faser- bzw. fadenförmigen Tragkörper. Dieses Bauelement ist gegebenenfalls durch bereichsweise Verformung des Zellgerüstes bzw. der Zellstruktur der Flocken aus Kunststoffschaum im Kern und/oder der Deckschichten thermisch verformt. Der faser- bzw. fadenförmige Tragkörper der Deckschicht ist in eine Schicht aus thermoplastischem Kunststoff eingebettet und über diese zumindest am Kern angeformt und kraft- bzw. formschlüssig mit diesem verbunden. Der thermoplastische Kunststoff ist dabei bei einer Temperatur zwischen 150°C und 200°C flüssig und/oder die Haftung ist sehr gering, z.B. zwischen 5 und 30 N/5cm.

Weiter ist aus der AT 406 606 B ein Formteil aus Schaumstoffplatten aus einem weichen, gegebenenfalls elastischen Schaumstoff mit zumindest bereichsweise bleibend verformten Zellstegen bekannt. Die daraus gebildete Mischkunststoffplatte besteht aus Schaumstoffgranulaten aus einem weichen Schaumstoff mit einer Korngröße von 2 mm bis 20 mm und weiteren Füllstoffen, z.B. Gummigranulat, Kreide, Hartpolyurethanabfälle, thermoplastischen Kunststoffabfällen oder Korkgranulat und Kalziumcarbonat in einer Größe von 2 mm bis 20 mm, die in dem Schaumstoff verteilt eingeschäumt sind. Die Zellstege und Zellwände des Schaumstoffgranulates und gegebenenfalls der Füllstoffe, sowie die Zellstege und/oder Zellwände der offenen Zellen des Schaumstoffes zwischen den einzelnen Flocken des Schaumstoffgranulates und bzw. oder des Füllstoffes sind ebenfalls bleibend plastisch verformt.

Der Kostendruck durch die Automobilindustrie sowie die ständige Forderung nach immer leichteren Kraftfahrzeugen bedingt, dass die Zulieferindustrie für Automobilteile nach Wegen sucht, um diesen Anforderungen gerecht zu werden.

Im Hinblick auf mehrlagige Bauelemente, wie diese z.B. als Hutablagen in Kraftfahrzeugen Verwendung finden, bedeutet dies, dass bislang versucht wurde Sandwichaufbauten bereitzustellen, wobei die einzelnen Lagen unterschiedliche Funktionen erfüllen, beispielsweise die Tragfähigkeit dieses Bauteils bereit stellen. Es konnte somit die Schichtdicke reduziert werden.

Aus der AT 502 618 A1 ist ein mehrlagiges Bauelement für Kraftfahrzeuge bekannt die eine Trägerschicht aufweist, auf der an zumindest einer Oberfläche zumindest eine Deckschicht angeordnet ist. Die Trägerschicht wird dabei durch einen Leichtschaumstoff mit einem Raumgewicht, ausgewählt aus einem Bereich mit einer unteren Grenze von 5 kg/m³ und einer oberen Grenze von 32 kg/m³ gebildet.

Üblicherweise wird zur Herstellung derartiger Bauteile bzw. Verkleidungsteile in einem ersten Schritt die Kern- bzw. Trägerschicht aus einem Flachmaterial durch Heißpressen umgeformt und in einem zweiten Schritt, gegebenenfalls in einer eigenen Form, mit der Deck- bzw. Dekorschicht verbunden, wozu gegebenenfalls eigene Klebeschichten eingesetzt werden.

Das Dokument EP-A-0 247 344 offenbart ein Verfahren, bei dem eine erste Oberfläche des Formteils mit einer zu einer zweiten, der ersten Oberfläche entlang eines Querschnittes des Formteils gegenüberliegenden Oberfläche unterschiedlichen Temperatur beaufschlagt wird, also insbesondere das Oberwerkzeug und das Unterwerkzeug auf eine zueinander unterschiedliche Temperatur erhitzt werden, sowie unabhängig davon durch das eingangs genannte Formwerkzeug, bei dem das Oberwerkzeug und das Unterwerkzeug auf eine zueinander unterschiedliche Temperatur erhitzbar ausgebildet sind.

Ausgehend von EP-A-0 247 344 richtet sich Anspruch 1 auf ein Verfahren, bei dem nicht die Trägerschicht sondern die weitere Schicht aus Schaumstoff stärker erwärmt werden soll. Gelöst wird dies mit den Merkmalen des Anspruches 1.

Gemäß einer Ausführungsvariante des Verfahrens ist vorgesehen, dass ein Temperaturunterschied zwischen dem Oberwerkzeug und dem Unterwerkzeug von mindestens 50 °C eingestellt wird. Es wird damit erreicht, insbesondere wenn die Trägerschicht aus einem faserverstärkten Thermoplast besteht oder Thermoplast basierend ausgebildet ist, dass die Trägerschicht sehr rasch verformt werden kann, wobei trotz der kurzen Umformzeit aufgrund der um zumindest diesen Temperaturwert heißeren Trägerschicht eine gute Anbindung der zumindest einen weiteren Schicht, insbesondere einer Absorber- und/oder Dekorschicht, mit entsprechend hoher Haftfestigkeit dieser weiteren Schicht auf der Trägerschicht erreicht werden kann.

Es ist besonders bevorzugt, wenn das Schichtmaterial für die Trägerschicht und oder die weitere Schicht vor der Zuführung zum Werkzeug erwärmt wird/werden, wodurch die Zykluszeit im Formgebungswerkzeug weiter reduziert werden kann. Insbesondere können damit auch höhere Temperaturschwankungen in diesem Werkzeug, die durch den Zyklus Einbringen und Erhitzen der Trägerschicht bzw. der weiteren Schicht verursacht werden, vermieden werden. Zudem hat diese Ausführungsvariante des Verfahrens Vorteile in Hinblick darauf, dass vorzugsweise ein thermoplastisches Material mit einem duroplastischen Material mit dem Verfahren verbunden wird.

Bevorzugt wird als zweites Schichtmaterial ein Kunststoffschaum mit einem Raumgewicht von maximal 40 kg/m³, insbesondere maximal 30 kg/m³, verwendet. Nicht von Vorteil insbesondere deswegen, da mit der Abnahme des Raumgewichtes der Kunststoffschaumschicht diese während der Anbindung der Trägerschicht dieser nur wenig bis keine Unterstützung geben kann, d.h. keinen Gegendruck aufbaut, sodass die konturgenaue Ausbildung des Formteils problematischer ist. Positiv wirkt sich hingegen aus, wenn der Temperaturunterschied insbesondere zumindest 50 °C beträgt, da damit die Formgebung des Formteils innerhalb kurzer Zeit möglich ist. Bevorzugt wird ein Raumgewicht dieser geringen Größe verwendet, da damit trotz guter Schall - und Wärmedämmeigenschaften das Gewicht des Formteils und in weiterer Folge auch das Fahrzeuggewicht reduziert werden können.

Als Schichtmaterial für die Trägerschicht wird vorzugsweise ein faserverstärktes Thermoplast verwendet. Einerseits kann damit die Strukturfestigkeit des Formteils verbessert werden. Andererseits kann durch diese faserverstärkte Schicht als "Schwerschicht" auch die Schalldämmung verbessert werden. Zudem kann damit die Luftdichtheit verbessert werden, insbesondere wenn als weitere Schicht eine Schicht aus einem Kunststoffschaum verwendet wird.

Es kann auch vorgesehen werden, dass in dem Werkzeug neben der Verbindung der beiden Schichtmaterialien das Beschneiden des Formteils durchgeführt wird, wozu in dem Oberwerkzeug und/oder dem Unterwerkzeug des Formwerkzeugs ein, gegebenenfalls relativ zu diesem bzw. diesen verstellbares, Schneidwerkzeug angeordnet sein kann oder das Schneidwerkzeug durch das Oberwerkzeug und/oder das Unterwerkzeug gebildet ist. Es kann damit der Fertigungsgrad mit nur einem Werkzeug weiter erhöht werden. Daneben ist ein nicht unwesentlicher Vorteil der damit erreicht wird, dass Verschnitte durch Fehleinlegung eines Halbfertigfabrikats in ein Schneidwerkzeug ausgeschlossen werden können.

Weiter ist es möglich, dass das zweite Schichtmaterial oder ein zusätzliches Schichtmaterial für eine dritte Schicht auf der dem zweiten Schichtmaterial abgewandten Oberfläche des Trägermaterials angeordnet wird, dass also z.B. die Trägerschicht als Kernschicht zwischen zwei Deckschichten eingebettet ist. Insbesondere wird damit weitere Schicht, speziell wenn diese aus einem Schaumstoff mit einem Raumgewicht von maximal 30 kg/m³ besteht, besser gegen äußere Einflüsse geschützt, sodass die Porenstruktur und damit die Dämmeigenschaften der weiteren Schicht geschützter ist. Zudem kann damit das Schalldämmverhalten des Formteils beeinflusst werden, z.B. indem als dritte Schicht eine (weitere) Schwerschicht angeordnet wird.

Der Randbereich des Formteils wird vorzugsweise zumindest bereichsweise verpresst. In dem Oberwerkzeug und dem Unterwerkzeug des Formwerkzeuges kann dazu ein Formhohlraum ausgebildet sein, dessen Außenkontur der Kontur des zu fertigenden Formteils entspricht, wobei bei geschlossener Anordnung des Oberwerkzeugs zum Unterwerkzeug der Abstand zwischen dem Oberwerkzeug und dem Unterwerkzeug entlang der Außenkontur des Formhohlraums maximal 20 % eines maximalen Abstandes zwischen dem Oberwerkzeug und dem Unterwerkzeug entsprechen kann. Es wird damit eine bessere Haftung der einzelnen Schichten erreicht und kann vermieden, dass das Formteil während der Verwendung aufplatzt.

Nach einer anderen Ausführungsvariante des Formwerkzeugs ist vorgesehen, dass das Oberwerkzeug zumindest bereichsweise thermisch isoliert zu Unterwerkzeug ausgebildet ist. Es kann damit, insbesondere bei längeren Zykluszeiten, eine Anpassung der Temperaturen der beiden Formwerkzeugteile besser vermieden werden. Darüber hinaus kann diese thermische Isolierung als "Abstandhalter" zwischen den beiden Formwerkzeughälften dienen, wodurch für die Herstellung des Formhohlraums, der durch das Oberwerkzeug und das Unterwerkzeug definiert wird, eine geringere mechanische Bearbeitung erforderlich ist und diese damit kostengünstiger herstellbar sind.

Zum besseren Verständnis der Erfindung wird diese anhand der nachfolgenden Figuren näher erläutert.

Es zeigen jeweils in stark schematisch vereinfachter Darstellung:
- Fig. 1: eine Ausführungsform eines Formwerkzeuges in Seitenansicht geschnitten in geschlossener Stellung;
- Fig. 2: das Formwerkzeug nach Fig. 1 in offener Darstellung und in Seitenansicht geschnitten;
- Fig. 3: einen Ausschnitt aus einer Ausführungsvariante eines Formwerkzeuges in Seitenansicht geschnitten;
- Fig. 4: einen Ausschnitt aus einem Formteil in Seitenansicht geschnitten.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen.

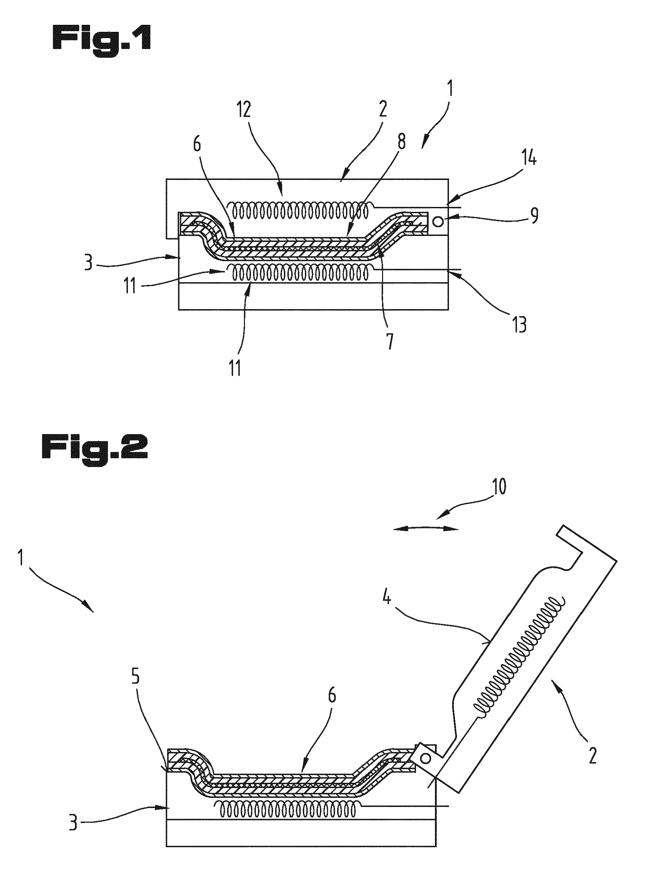

In den Fig. 1 und 2 ist eine Ausführungsvariante eines Formwerkzeuges 1 in geschlossener bzw. offener Stellung dargestellt. In der einfachsten Ausführung des Formwerkzeuges 1 weist dieses nur ein Oberwerkzeug 2 bzw. einen Stempel, und nur ein Unterwerkzeug 3 bzw. ein Gesenk auf, die eine obere Anlagefläche 4 und eine untere Anlagefläche 5 für ein Formteil 6 bilden. Zwischen dem Oberwerkzeug 2 und dem Unterwerkzeug 3 wird in der geschlossenen Stellung des Formwerkzeuges 1 ein Formhohlraum zur Ausbildung des Formteils 6 gebildet.

Der Formteil 6 kann beispielsweise ein Innenverkleidungsteil für ein Kraftfahrzeug sein, z.B. eine Türverkleidung, eine Fußbodenauskleidung im Bereich der Fahrer- oder Beifahrerseite, eine Auskleidung für den Fondbereich, eine Armaturenbrettverkleidung oder eine Hutablage sein. Insbesondere ist das Formteil 6 allerdings eine Motorraumverkleidung, die beispielsweise im Bereich von Kotflügeln oder zwischen Fahrerkabine und Motorraum oder im Bereich verschiedener Aggregate im Motorraum angeordnet wird, oder ein Anbauteil, der direkt am Motor angebracht wird.

Der Formteil 6 besteht in der einfachsten Ausführungsvariante aus einer Trägerschicht 7 und einer damit verbundenen, insbesondere direkt auf der Oberfläche der Trägerschicht 7 angeordneten, Schicht 8. Die Schicht 8 ist bevorzugt kraft- und/oder formschlüssig mit der Trägerschicht 7 verbunden, beispielsweise mit dieser verklebt.

Es besteht weiter die Möglichkeit, dass auf der Schicht 8 und/oder auf der Oberfläche der Trägerschicht 7, welche von der Schicht 8 abgewandt ist, eine dritte Schicht, insbesondere eine Deckschicht, angeordnet ist. Die Deckschicht kann beispielsweise durch einen Teppich, einen Filz, ein Vlies, z.B. ein Polyestervlies ein Textilmaterial, wie z.B. ein Gewebe oder ein Gewirke, eine, insbesondere geprägte, Kunststofffolie, eine Metallfolie, z.B. eine Aluminium- oder Aluminiumlegierungsfolie gebildet sein.

Die Trägerschicht 7 ist bevorzugt eine faserverstärkte Kunststoffschicht, insbesondere umfassend einen oder bestehend aus einem thermoplastischen Kunststoff. Der Kunststoff dafür kann beispielsweise durch ein Polyethylen, ein Polypropylen, ein Polyamid oder Polyvinylchlorid sein. Die Fasern können ausgewählt sein aus einer Gruppe umfassend Glasfasern, Mineralfasern, wie z.B. Basaltfasern, Naturfasern, wie z.B. Hanffasern oder Holzfasern, etc. Die Fasern können zu besseren Einbindung in bzw. Anbindung an den Kunststoff mit einem Haftvermittler, beispielsweise einem Kunststoffharz bzw. einem Primer, beschichtet oder imprägniert sein. Vorzugsweise wird die Trägerschicht 7 aus einer aus einer Matte aus dem Kunststoff, der insbesondere ebenfalls faserförmig eingesetzt wird, z.B. aus Polypropylenfasern, und den weiteren, anorganischen Fasern, also beispielsweise den Glasfasern gebildet, die bevorzugt als Vlies ausgebildet ist, das heißt als textiles Flächengebilde aus lose zusammenliegenden Fasern, welche noch nicht miteinander verbunden sind. Selbstverständlich können die Fasern auch zu Garnen verarbeitet und diese zu Matten gewoben, gewirkt oder gestrickt werden. Ebenso können aber auch Matten eingesetzt werden, die ein- oder beidseitig vernadelt sind. Es wird also vorzugsweise für die Trägerschicht 7 eine Flächengebilde aus schmelzbaren und "nicht schmelzbaren" anorganischen oder organischen Fasern verwendet, wobei sich der Ausdruck "nicht schmelzbar" im Zusammenhang mit der Erfindung auf die Verarbeitungstemperatur während der Herstellung des Formteils 6 bezieht, da selbstverständlich die genannten anorganischen Fasern schmelzbar sind, auch allerdings bei sehr viel höheren Temperaturen im Vergleich zu den organischen Kunststofffasern, wie beispielsweise Polypropylen. Daneben können aber auch z.B. extrudierte Platten aus, gegebenenfalls faserverstärkten, Thermoplast für die Trägerschicht 7 eingesetzt werden, wobei hierfür ebenfalls die "nicht schmelzbaren" Fasern zum Einsatz kommen können.

Die anorganischen Fasern sind bevorzugt zumindest teilweise aus Langglasfasern mit einer Länge von zumindest 10 mm gebildet. Dadurch werden die Handhabbarkeit der Fasern bei der Verarbeitung zum Bauelement und die mechanische Festigkeit des Bauelements verbessert. Bei Bedarf können aber auch Kurzfasern mit einer Länge von 0,2 mm bis 0,4 mm oder ein Gemisch aus Lang- und Kurzfasern eingesetzt werden.

Die Trägerschicht 7 kann ein Flächengewicht ausgewählt aus einem Bereich von 300 g/m³ bis 3000 g/m³ aufweisen.

Die Schicht 8 besteht bzw. umfasst einen Schaumstoff, insbesondere einem so genannten Leichtschaumstoff. Als Rohstoff für den (Leicht)Schaumstoff kann beispielsweise ein ein- oder mehrkomponentiges Polyurethan, beispielsweise durch Zusammenfügen einer Polyisocyanatkomponente mit einer Polyolkomponente, wie dies aus dem Stand der Technik bereits bekannt ist, oder aber auch Polyolefine, wie z.B. Polypropylene und Polyethylene etc., verwendet werden. Die Schicht 8 weist vorzugsweise ein Raumgewicht ausgewählt aus einem Bereich mit einer unteren Grenze von 5 kg/m³ und einer oberen Grenze von 40 kg/m³, insbesondere ausgewählt aus einem Bereich mit einer unteren Grenze von 15 kg/m³ und einer oberen Grenze von 30 kg/m³, auf. Beispielsweise kann die Schicht 8 ein Raumgewicht aufweisen von 7 kg/m³ oder 10 kg/m³ oder 14 kg/m³ oder 18 kg/m³. Die Schicht 8 kann bei dem hergestellten Bauteil auch als Absorberschicht (in Bezug auf ihre akustischen Eigenschaften) bezeichnet werden.

Daneben besteht auch die Möglichkeit, dass die Schicht 8 aus einem Verbundschaumstoff hergestellt wird, also aus über einen Neuschaum miteinander verbundenen Schaumstoffflocken aus Rest- bzw. Altschaumstoffen.

Ein erfindungsgemäß hergestelltes Formteil 6 kann also beispielsweise aus einer Polyurethanschaumstoffschicht mit einem Raumgewicht von maximal 30 kg/m³ und einer Deckschicht aus mit Glasfasern verstärktem Polypropylen bestehen bzw. diese Schichten umfassen.

Mit den gewählten Materialien für die Trägerschicht 7 und die damit verbundene Schicht 8 kann die Tragfähigkeit des Formteils 6 variiert werden kann und somit ein bestmögliches Verhältnis zwischen Gewicht und Tragfähigkeit dem jeweiligen Anwendungsfall entsprechend gewählt werden. Das Formteil 6 ist insbesondere selbsttragend, d.h. dass dieses keine Unterstützung zur Aufrechterhaltung seiner Form benötigt. Daneben werden dem Formteil 6 mit den gewählten Werkstoffen bzw. Werkstoffkombinationen schall- und/oder wärmedämmende Eigenschaften verliehen.

Zur Herstellung des Formteils 6 wird eine Lage aus dem zweiten Schichtmaterial für die Schicht 8 bereitgestellt. Dazu wird diese Lage, die eine Schichtdicke von 0,5 cm bis 5 cm aufweisen kann, üblicherweise aus einem Schaumstoffblock oder einer Schaumstoffrolle geschnitten bzw. geschält. Es besteht aber auch die Möglichkeit, dass die Schicht 8, d.h. das Halbfertigfabrikat hierfür, bereits in der gewünschten Schichtdicke hergestellt wird. Dieses Halbfertigfabrikat wird bei geöffnetem Formwerkzeug auf das Unterwerkzeug 3 aufgelegt. Hinsichtlich der Außenkontur dieses Halbfertigfabrikats aus dem Schaumstoff besteht die Möglichkeit, dass dieses bereits auf die Endabmessungen des fertigen Formteils 6 beschnitten ist oder mit einem Überstand bereitgestellt wird, wobei in diesem Fall die Endbeschneidung des Formteils 6 nach dessen Formgebung erfolgt.

Auf diese Schicht 8, d.h. das Halbfertigfabrikat hierfür, wird in weiterer Folge die Trägerschicht 7 direkt aufgelegt. Die Außenkontur der Trägerschicht 7 kann ebenfalls bereits auf die Endabmessungen des fertigen Formteils 6 beschnitten sein. Ebenso kann diese mit einem Überstand bereitgestellt werden, und die Endbeschneidung des Formteils 6 nach dessen Formgebung erfolgen. Letzteres kann beispielsweise von Vorteil sein, wenn später bei dem fertigen Formteil 6 die Trägerschicht 7 in der eingebauten Lage des Formteils 6 nicht sichtbar sein soll.

Nach und/oder durch Schließung des Formwerkzeugs 1 erfolgt die Formgebung des Formteils 6. Die Schließung kann dabei über das Verschwenken des Oberwerkzeuges 2 um eine Schwenkachse 9, die zwischen dem Oberwerkzeug 2 und dem Unterwerkzeug 3 ausgebildet ist, gemäß Pfeil 10 erfolgen oder es wird, wenn die beiden Werkzeugteile nicht gelenkig miteinander verbunden sind, das Oberwerkzeug 2 abgesenkt bzw. das Unterwerkzeug 3 gegen das Oberwerkzeug 2 translatorisch verstellt.

Die Formgebung des Formteils 6 selbst und die Verbindung der einzelnen Schichten miteinander erfolgt bei erhöhter Temperatur und gegebenenfalls unter erhöhtem Druck. Durch die erhöhte Temperatur wird u.a. bewirkt, dass der Kunststoff der Trägerschicht 7 so weit erwärmt wird, dass dieser zumindest annähernd zähplastisch wird und damit die anorganischen bzw. organischen Fasern in diesem Kunststoff eingebettet werden, wodurch die Selbsttragfähigkeit des abgekühlten umgeformten Formteils 6 erreicht wird. Andererseits wird damit auch die Anbindung der Schicht 8 durch die Klebewirkung des zähplastischen Kunststoffes erreicht, sodass auf eine zusätzliche Klebeschicht zwischen der Trägerschicht 7 und der Schicht 8 verzichtet werden kann. Indem das Schichtgebilde gegebenenfalls zwischen dem Gesenk und dem Stempel komprimiert wird, kann einen höhere Haftfestigkeit der Schichten aneinander erreicht werden, da durch den Druck der zähplastische Kunststoff teilweise in die Poren des offenporigen Schaumstoffes der Schicht 8 eindringt und damit eine Art "Verkrallung" erreicht wird.

Unter dem Begriff "offenporig" wird verstanden, dass der Schaumstoff der Schicht 8 zumindest großteils, vorzugsweise zur Gänze, lediglich aus einem Zellgerüst mit Zellstegen zwischen den Poren besteht. Die Trägersicht 7 ist hingegen zumindest annähernd, insbesondere vollständig, dicht ausgeführt, wobei "mit zumindest annähernd" gemeint ist, dass der Grad der Luftdichtheit und/oder Wasserdichtheit abhängig ist vom eingesetzten Material.

Für die Formgebung sind das Oberwerkzeug 2 und das Unterwerkzeug 3 auf eine im Vergleich zur Raumtemperatur erhöhte Temperatur erhitzt, wobei allerdings das Unterwerkzeug 3 eine zum Oberwerkzeug 2 unterschiedliche Temperatur aufweist. Insbesondere weist das Unterwerkzeug 3 eine höhere Temperatur auf als das Oberwerkzeug 2. Bevorzugt beträgt der Temperaturunterschied zumindest 50 °C, insbesondere zumindest 100 °C. Beispielsweise können für die Herstellung eines Formteils 6 aus einer Trägerschicht 7 aus einem Polyurethanweichschaum und einer Schicht 8 aus einem Polypropylen/Glasfaser-Gemisch das Oberwerkzeug 3 eine Temperatur zwischen 80 °C und 120 °C, insbesondere ca. 100 °C, und das Unterwerkzeug 3 eine Temperatur zwischen 140 °C und 220 °C, insbesondere ca. 200 °C, aufweisen.

Es besteht jedoch auch die Möglichkeit, dass die Anordnung der Schichten in dem Formwerkzeug umgekehrt ist, dass also die Trägerschicht 7 dem Unterwerkzeug 3 und die Schicht 8 dem Oberwerkzeug 2 zugewandt sind, sodass in weiterer Folge auch die Temperaturen genau umgekehrt zu den Ausführungen im Absatz davor sind. Jedenfalls weist jener Werkzeugteil, der der weiteren Schicht 8, also der Absorberschicht, zugewandt ist, die im Vergleich zum anderen Werkzeugteil, der der Trägerschicht 7 zugewandt ist, höhere Temperatur auf.

Zur Beheizung des Oberwerkzeuges 2 und des Unterwerkzeuges 3 können Heißdampf und/oder elektrische Heizungen, z.B. Widerstandsheizungen oder Strahlungsheizungen (IR-Heizungen), Heizungen mit einer Flüssigkeit, beispielsweise einem Öl, als Trägermedium, etc., verwendet werden.

Die unterschiedliche Erhitzbarkeit bzw. Erwärmbarkeit des Oberwerkzeuges 2 und des Unterwerkzeuges 3 ist in den Fig. 1 und 2 mit Heizelementen 11, 12 angedeutet, die der Einfachheit halber als Heizwendeln dargestellt sind. Diese Darstellung ist nicht beschränkend sondern nur erläuternd für die Erfindung zu sehen. Des Weiteren sind die Heizelemente 11, 12 mit Anschlusselementen 13, 14 versehen, die nach außen zu einem oder mehreren Regel- und/oder Steuerelementen führen. Auch diese Darstellung hat ebenfalls nur erläuternden Charakter.

Es sei in diesem Zusammenhang erwähnt, dass es im Rahmen der Erfindung nicht zwingend erforderlich ist, die Werkzeugteile selbst zu erhitzen, um über diese Werkzeugteile eine Wärmeübertragung auf das Formteil 6, d.h. den in das Formwerkzeug 1 eingelegten Schichtaufbau, zu erreichen, sondern können in diesem Werkzeug, beispielsweise in entsprechenden Ausnehmungen, auch Heizelemente angeordnet sein, beispielsweise Strahlungsheizelemente, von denen direkt die Wärmeübertragung auf das Formteil 6 erfolgt. Allerdings weisen auch in diesem Fall, nachdem die beiden Werkzeugteile ebenfalls miterhitzt werden, diese Werkzeugteile ebenfalls eine zueinander unterschiedliche Temperatur auf.

Zur Temperaturregelung und/oder -steuerung des Oberwerkzeuges 2 und des Unterwerkzeuges 3 können bei Bedarf entsprechende, aus dem Stand der Technik zur Temperaturregelung bekannte Regel- und/oder Steuereinrichtung eingesetzt werden.

Nachdem das umgeformte Formteil 6 soweit erkaltet, d.h. verfestigt ist, dass es aus dem Formwerkzeug 1 entnommen werden kann, also insbesondere der zähplastische Kunststoff der Trägerschicht 7 eine Festigkeit aufweist, dass eine weitere Verformung nicht mehr oder nur mehr marginal auftritt, wird das Formwerkzeug 1 durch Abheben oder Verschwenken des Oberwerkzeuges 2 geöffnet und das Formteil 6 entnommen.

Der Vollständigkeit halber sei erwähnt, dass das Formwerkzeug 1 Bestandteil einer Formpresse ist, wobei die neben dem Formwerkzeug 1 weiteren Bestandteile derartiger Formpressen bereits aus dem Stand der Technik bekannt sind, beispielsweise entsprechende Hydraulikeinrichtungen etc., sodass sich eine weitere Erörterung an dieser Stelle erübrigt.

Es ist weiter möglich, dass das Oberwerkzeug 2 und/oder das Unterwerkzeug 3 mehrteilig ausgebildet sind, um eine unterschiedliche Zustellung der Formflächen zum Formteil 6 und damit eine unterschiedliche Kompression bzw. Verdichtung des Formteils 6 zu erreichen.

Die Verpressung des Formteils 6 kann um einen Faktor erfolgen, der ausgewählt ist aus einem Bereich mit einer unteren Grenze von 1,2 und einer oberen Grenze von 10, insbesondere ausgewählt aus einem Bereich mit einer unteren Grenze von 2 und einer oberen Grenze von 5.

Des Weiteren sei der Vollständigkeit halber erwähnt, dass das Oberwerkzeug 2 und das Unterwerkzeug 3 im Bereich des Formhohlraumes eine an die Geometrie des herzustellenden Formteils 6 entsprechend angepasste Oberflächengestaltung bzw. Geometrie aufweisen, sodass also die Gestalt des geschlossenen Formhohlraums die Gestalt des fertigen Formteils 6 festlegen. Es können dementsprechend also zumindest in einzelnen Bereichen der Werkzeugoberflächen Vertiefungen oder Erhöhungen vorhanden sein, wobei gegebenenfalls im Bereich einer Vertiefung im Unterwerkzeug 3 das Oberwerkzeug 2 eine entsprechende Erhöhung oder umgekehrt aufweisen kann. Bevorzugt sind die Teile das Formwerkzeug 1, insbesondere das Oberwerkzeug 2 und das Unterwerkzeug 3, bündig übereinander liegend mit bündigen Seitenflächen ausgebildet.

Das Formteil 6 kann neben der voranstehend beschriebenen zweischichtigen Ausführung auch mehrschichtig mit mehr als zwei Schichten ausgebildet sein. Beispielsweise besteht die Möglichkeit, die Schicht 8 mehrschichtig auszubilden, also beispielsweise mehrere Leichtschaumstoffschichten übereinander anzuordnen und diese insbesondere miteinander form- und/oder kraftschlüssig zu verbinden. Es ist dabei auch möglich die Schicht 8 aus mehreren Schichten unterschiedlichen Materials zu bilden, beispielsweise einer oder mehreren Kunststoffschaumschichten und einer, insbesondere dazwischen angeordneten, Wabenplatte aus Kunststoff, Metall oder Pappe.

Des Weiteren ist es möglich nicht nur eine Oberfläche der Schicht 8mit der Trägerschicht 7 bzw. einer Deckschicht zu versehen, sondern beispielsweise auch eine Deckschicht an der unteren (bezogen auf die Darstellung in den Fig. 1 und 2), zweiten Oberfläche vorzusehen, wie dies in den Fig. 1 und 2 dargestellt ist. Diese weitere Decksicht kann aus einem zu Material der Trägerschicht unterschiedlichen oder dem gleichen Material bestehen. Es kann also beispielsweise die Schicht 8 auf der der Trägerschicht 7 abgewandten Oberfläche mit einer Metallfolie, beispielsweise einer Aluminiumfolie, als Hitzeschutz versehen sein. Derartige Ausführungen werden insbesondere bei Bauteilen bevorzugt, die unmittelbar in der Nähe oder auf dem Motor(block) oder der Abgasanlage eines Kfz angeordnet werden.

Es ist weiter auch möglich die Trägerschicht 7 und/oder die weitere Schicht 8 völlig abgeschlossen, d.h. von außen unsichtbar, in Deckschichten anzuordnen, wobei es nach einer Ausführungsvariante möglich ist, lediglich die obere Oberfläche der Trägerschicht 7 sowie die untere Oberfläche der Schicht 8 mit (je) einer Deckschicht zu versehen, wobei diese Deckschichten größere Abmessungen aufweisen und in den Randbereichen miteinander verbunden sind.

Die Trägerschicht 7 bildet in den letztgenannten Beispielen somit eine Kernschicht.

In Hinblick auf die Umformung und die Verkürzung der Taktzeit ist es von Vorteil, wenn dass das Schichtmaterial für die Trägerschicht 7 und/oder die Schicht 8, also insbesondere der Kunststoffschaumstoff, vor der Einführung in das Formwerkzeug 1 erwärmt wird. Die Erwärmung kann beispielsweise auf eine Temperatur zwischen 50 °C und 150 °C erfolgen.

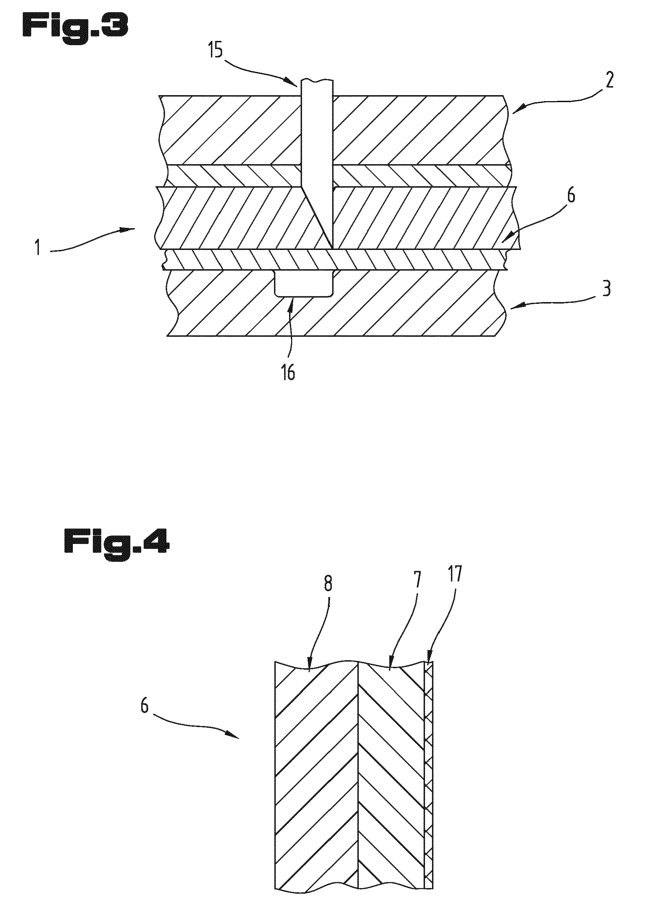

In der Fig. 3 ist ein Ausschnitt aus einer weiteren und gegebenenfalls für sich eigenständigen Ausführungsform des Formwerkzeuges 1 gezeigt, wobei wiederum für gleiche Teile gleiche Bezugszeichen bzw. Bauteilbezeichnungen wie in den vorangegangenen Fig. 1 und 2 verwendet werden. Um unnötige Wiederholungen zu vermeiden, wird auf die detaillierte Beschreibung in den vorangegangenen Fig. 1 und 2 hingewiesen bzw. Bezug genommen.

Bei dieser Ausführungsvariante des Formwerkzeuges 1 ist in dem Oberwerkzeug 2 ein Schneidwerkzeug 15 relativ zum Oberwerkzeug 2 verstellbar angeordnet. Im Unterwerkzeug 3 ist in der Fluchtlinie zum Schneidwerkzeug 15 eine Ausnehmung 16 ausgebildet, in die das Schneidwerkzeug 15 während der Abwärtsbewegung eintauchen kann. Es wird damit erreicht, dass das Formteil 6 in dem Formwerkzeug 1 nach der Formgebung auch auf die endgültigen Abmessungen beschnitten werden kann, wodurch eine passgenaue Einlegung von bereits vorkonfektionierten Schichtmaterialien für das Formteil 6 nicht notwendig ist.

Selbstverständlich besteht auch die Möglichkeit der umgekehrten Ausführungsvariante, dass also das Schneidwerkzeug 15 im Unterwerkzeug 3 und relativ verstellbar zu diesem und die Ausnehmung 16 im Oberwerkzeug 2 angeordnet sind.

Des Weiteren besteht die Möglichkeit auf die Ausnehmung 16 zu verzichten, und dafür die Hubbewegung des Schneidwerkzeuges 15 entsprechend zu justieren, sodass dieses nur bis zur Oberfläche des Unterwerkzeuges 3 oder des Oberwerkzeuges 2 verfahrbar ist.

Es ist weiter möglich, dass das Oberwerkzeug 2 und/oder das Unterwerkzeug 3 entsprechende Schneiden bzw. Schneidkanten oder Stanzkanten aufweisen, beispielsweise in Form einer so genannten Tauch/Pinch-Kante, sodass der Beschnitt des Formteils 6 durch die Hubbewegung zur Verformung oder eine zusätzliche Hubbewegung des Oberwerkzeugs 2 und/oder das Unterwerkzeugs 3 erfolgt.

Derartige Schneidwerkzeuge 15 können in Bereich einer einzigen oder im Bereich von mehreren, insbesondere allen, Außenkanten der Außenkontur des Formteils 6 bzw. des Formhohlraumes angeordnet sein. Zudem können im Bereich einer Seitenkante mehrere Schneidwerkzeuge 15 nebeneinander angeordnet sein, die die jeweilige gesamte Außenkante des Formteils 6 beschneiden.

Es besteht weiter die Möglichkeit, dass in dem Formteil 6 zumindest eine Ausnehmung bzw. ein Durchbruch ausgebildet wird. Dazu kann in dem Oberwerkzeug 2 und/oder Unterwerkzeug 3 zumindest ein Schneid- oder Stanzwerkzeug angeordnet sein, dass gegebenenfalls relativ zu dem jeweiligen Werkzeugteil verstellbar ist und mit dem die Ausnehmung erzeugt werden kann.

Nach einer weiteren, nicht dargestellten Ausführungsvariante des Formwerkzeuges 1 besteht die Möglichkeit, dass zwischen dem Oberwerkzeug 2 und dem Unterwerkzeug 3 ein Rahmenelement angeordnet ist. Dieses Rahmenelement kann einerseits dazu verwendet werden, um eine erste, untere Deckschicht während des Einlegens der weiteren Schichten bzw. Lagen in den Formhohlraum zu fixieren, um eine Faltenbildung zu vermeiden.

Andererseits kann dieses Rahmenelement auch eine thermische Isolierung zwischen dem Oberwerkzeug 2 und dem Unterwerkzeug 3 bilden, um damit eine Wärmeleitung vom heißeren zum kälteren Werkzeugteil zu reduzieren bzw. zu vermeiden. Das Rahmenelement weist eine Ausnehmung auf, dessen Kontur der Außenkontur des Formhohlraums bzw. Formteil 6 entspricht bzw. der so groß ist, dass kein Teil das Rahmenelementes in den Formhohlraum hineinragt.

Das Rahmenelement kann beispielsweise durch vertikales Verschieben auf die Deckschicht aufgelegt werden. Dazu kann das Formwerkzeug entsprechende Führungen aufweisen. Derartige Führungen sind für Presswerkzeuge bereits aus dem Stand der Technik bekannt und können beispielsweise säulenartig ausgebildet sein, wobei in den einzelnen Werkzeugteilen entsprechende Durchbrüche, in denen diese Säulen aufgenommen werden, ausgebildet sind.

Es ist selbstverständlich andererseits auch möglich, das Rahmenelement händisch aufzulegen. Bevorzugt wird jedoch die voll- bzw. halbautomatische Verfahrensweise.

Das Rahmenelement kann mit einer entsprechenden Kraft gegen die Deckschicht 2 und das Unterwerkzeug 3 gepresst werden. Es können dazu entsprechende, aus dem Stand der Technik bekannte Mittel und Vorrichtungen verwendet werden.

Sofern das Rahmenelement ausschließlich als thermische Isolierung dient, kann dieses auch mit dem Oberwerkzeug 2 oder dem Unterwerkzeug 3 verbunden sein.

Als Werkstoffe für das thermisch isolierende Rahmenelement werden solche verwendet, die eine schlechte Wärmeleitfähigkeit aufweisen, beispielsweise Kunststoffe, insbesondere Hochleistungskunststoffe, die einer dem Werkzeug entsprechende hohe Temperaturbelastung standhalten.

Nach einer anderen Ausführungsvariante des Formteils 6 ist vorgesehen, dass der Randbereich des Formteils 6 zumindest bereichsweise verpresst wird. Dazu kann bei geschlossener Anordnung des Oberwerkzeuges 2 zum Unterwerkzeug 3 der Abstand zwischen dem Oberwerkzeug 2 und dem Unterwerkzeug 3 entlang der Außenkontur des Formhohlraums, also des Randbereichs des Formteils 6 maximal 20 %, insbesondere maximal 10 %, eines maximalen Abstandes zwischen dem Oberwerkzeug 2 und dem Unterwerkzeug 3 im Bereich des Formhohlraums entsprechen, sodass also die Randzonen des Formteils 6 eine entsprechend höhere Verdichtung erfahren.

In Fig. 4 ist ein Ausschnitt aus einer Ausführungsvariante des Formteils 6 im Schnitt dargestellt. Dieser weist die Trägerschicht 7 aus beispielsweise einer Polypropylen/Naturfaser Mischung mit einem Flächengewicht zwischen 500 g/m² und 1000 g/m² auf. Mit der Trägerschicht 7 ist die weitere Schicht 8 an einer ersten Oberfläche direkt verbunden. Die weitere Schicht 8 weist ein Raumgewicht zwischen 10 kg/m³ und 30 kg/m³ auf und kann aus einem Polyurethanschaum gebildet sein. Auf der zweiten, der ersten Oberfläche gegenüberliegenden Oberfläche ist eine Deckschicht 17 bzw. ein Abdeckvlies, insbesondere ein Polyestervlies mit einem Flächengewicht von ca. 100 g/m² angeordnet und mit der Trägerschicht 7 verbunden, insbesondere direkt verbunden. Auf der der Trägerschicht 7 abgewandten Oberfläche der weiteren Schicht 8 kann noch eine Metallfolie aufkaschiert sein, beispielsweise über eine Kleberschicht.

Vorzugsweise wird der gesamte Schichtverbund in einem Formwerkzeug 1 in einem Schritt hergestellt, d.h. die einzelnen Schichten, also insbesondere die Trägerschicht 7 und die zumindest eine weitere Schicht 8, miteinander verbunden und das Formteil 6 beschnitten. Mit anderen Worten kann die Umformung der Trägerschicht 7, der Beschnitt der Trägerschicht 7, die Umformung der zumindest einen weiteren Schicht 8, insbesondere einer Schaumstoffschicht, der Beschnitt der zumindest einen weiteren Schicht 8 und die Verbindung der Schichten in einem Schritt erfolgen. Es kann mit dem Formwerkzeug 1 nach dem beschriebenen Verfahren ein Duroplast mit einem Thermoplast zu dem Formteil 6 verbunden und beschnitten werden.

Die Ausführungsbeispiele zeigen mögliche Ausführungsvarianten des Verfahrens zur Herstellung des Formteils 6 bzw. des Formwerkzeuges 1, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt.

Der Ordnung halber sei abschließend darauf hingewiesen, dass zum besseren Verständnis des Aufbaus des Formwerkzeuges 1 dieses bzw. dessen Bestandteile teilweise unmaßstäblich und/oder vergrößert und/oder verkleinert dargestellt wurden.

### Bezugszeichenaufstellung

- 1: Formwerkzeug
- 2: Oberwerkzeug
- 3: Unterwerkzeug
- 4: Anlagefläche
- 5: Anlagefläche

- 6: Formteil
- 7: Trägerschicht
- 8: Schicht
- 9: Schwenkachse
- 10: Pfeil

- 11: Heizelement
- 12: Heizelement
- 13: Anschlusselement
- 14: Anschlusselement
- 15: Schneidwerkzeug

- 16: Ausnehmung
- 17: Deckschicht

## Patentansprüche

1. Verfahren zum Herstellen eines kaschierten Formteils (6) zumindest umfassend eine Trägerschicht (7) aus einem ersten Schichtmaterial umfassend einen thermoplastischen Kunststoff und eine weitere Schicht (8) aus einem zweiten Schichtmaterial aus einem Schaumstoff, wobei die beiden Schichtmaterialien in einem Formwerkzeug (1) bei einer Temperatur oberhalb der Raumtemperatur miteinander verbunden werden, wobei das Formwerkzeug (1) ein Oberwerkzeug (2) und ein Unterwerkzeug (3) umfasst, und eine erste Oberfläche des Formteils (6) mit einer zu einer zweiten, der ersten Oberfläche entlang eines Querschnittes des Formteils (6) gegenüberliegenden Oberfläche unterschiedlichen Temperatur beaufschlagt wird, **dadurch gekennzeichnet, dass** jener Werkzeugteil, der der weiteren Schicht (8) zugewandt ist, die im Vergleich zum anderen Werkzeugteil, der der Trägerschicht (7) zugewandt ist, höhere Temperatur aufweist.

2. Verfahren nach Anspruch 1, **dadurch gekennzeichnet, dass** ein Temperaturunterschied von mindestens 50 °C eingestellt wird.

3. Verfahren nach Anspruch 1 oder 2, **dadurch gekennzeichnet, dass** das Schichtmaterial für die Trägerschicht (7) und/oder das zweite Schichtmaterial vor der Zuführung zum Formwerkzeug (1) erwärmt wird/werden.

4. Verfahren nach einem der Ansprüche 1 bis 3, **dadurch gekennzeichnet, dass** als zweites Schichtmaterial ein Kunststoffschaum mit einem Raumgewicht von maximal 40 kg/m³ verwendet wird.

5. Verfahren nach einem der Ansprüche 1 bis 4, **dadurch gekennzeichnet, dass** als Schichtmaterial für die Trägerschicht (7) ein faserverstärktes Thermoplast verwendet wird.

6. Verfahren nach einem der Ansprüche 1 bis 5, **dadurch gekennzeichnet, dass** in dem Formwerkzeug (1) neben der Verbindung der beiden Schichtmaterialien auch das Beschneiden des Formteils (6) durchgeführt wird.

7. Verfahren nach einem der Ansprüche 1 bis 6, **dadurch gekennzeichnet, dass** das zweite Schichtmaterial oder ein zusätzliches Schichtmaterial für eine dritte Schicht auf der dem zweiten Schichtmaterial abgewandten, ersten Oberfläche der Trägerschicht (7) angeordnet wird.

8. Verfahren nach einem der Ansprüche 1 bis 7, **dadurch gekennzeichnet, dass** der Randbereich des Formteils (6) zumindest bereichsweise verpresst wird.

## Claims

1. A method for manufacturing a laminated moulded part (6) at least comprising a backing layer (7) made of a first layer material comprising a thermoplastic material, and a further layer (8) made from a second layer material comprising a foam material, wherein the two layer materials are interconnected in a moulding tool (1) at a temperature above room temperature, wherein the moulding tool (1) comprises an upper tool (2) and a lower tool (3), and a first surface of the moulding tool (6) is subjected to a temperature that differs from a temperature of a second surface that is opposite the first surface along a cross section of the moulding tool (6), **characterised in that** that tool part which faces the further layer (8) has a higher temperature when compared to the temperature of the other tool part, which faces the backing layer (7).

2. The method according to claim 1, **characterised in that** a temperature difference of at least 50 °C is set.

3. The method according to claim 1 or 2, **characterised in that** the layer material for the backing layer (7) and/or the second layer material are/is heated prior to feed-in to the moulding tool (1).

4. The method according to any one of claims 1 to 3, **characterised in that** as a second layer material a plastic foam with a weight per unit volume of max. 40 kg/m³ is used.

5. The method according to any one of claims 1 to 4, **characterised in that** as a layer material for the backing layer (7) a fibre-reinforced thermoplastic material is used.

6. The method according to any one of claims 1 to 5, **characterised in that** in the moulding tool (1), apart from the connection of the two layer materials, the cutting of the moulded part (6) is also carried out.

7. The method according to any one of claims 1 to 6, **characterised in that** the second layer material or an additional layer material for a third layer is arranged on the first surface of the backing layer (7), which surface faces away from the second layer material.

8. The method according to any one of claims 1 to 7, **characterised in that** the edge region of the moulded part (6) is subjected to pressing, at least in some regions.

## Revendications

1. Procédé de fabrication d'une pièce de formage contrecollée (6) comprenant au moins une couche de support (7) en un premier matériau stratifié comportant une matière thermoplastique et une autre couche (8) en un deuxième matériau stratifié en une mousse, les deux matériaux stratifiés étant réunis l'un avec l'autre dans un outil de formage (1) à une température supérieure à la température ambiante, l'outil de formage (1) comprenant un outil supérieur (2) et un outil inférieur (3), et une première surface de la pièce de formage (6) étant exposée à une température qui diffère de la température d'une deuxième surface qui est disposée en regard de la première surface, le long d'une section transversale de la pièce de formage (6), **caractérisé en ce que** la partie d'outil qui est en regard de la couche supplémentaire (8), présente une température supérieure par rapport à celle de l'autre partie d'outil qui est en regard de la couche de support (7).

2. Procédé selon la revendication 1, **caractérisé en ce qu'**une différence de température d'au moins 50 °C est établie.

3. Procédé selon la revendication 1 ou 2, **caractérisé en ce que** le matériau stratifié pour la couche de support (7) et/ou le deuxième matériau stratifié est (ou sont) chauffé(s) avant d'être emmené(s) à l'outil de formage (1).

4. Procédé selon l'une des revendications 1 à 3, **caractérisé en ce qu'**une mousse en matière plastique ayant un poids spécifique de 40 kg/m³ au maximum est utilisé comme deuxième matériau stratifié.

5. Procédé selon l'une des revendications 1 à 4, **caractérisé en ce qu'**un matériau thermoplastique renforcé de fibres est utilisé comme matériau stratifié pour la couche de support (7).

6. Procédé selon l'une des revendications 1 à 5, **caractérisé en ce que**, dans l'outil de formage (1), en plus de la réunion des deux matériaux stratifiés, est également effectuée la découpe de la pièce de formage (6).

7. Procédé selon l'une des revendications 1 à 6, **caractérisé en ce que** le deuxième matériau stratifié ou un matériau stratifié supplémentaire pour une troisième couche, est disposé sur la première surface de la couche de support (7) opposée au deuxième matériau stratifié.

8. Procédé selon l'une des revendications 1 à 7, **caractérisé en ce que** la zone de bord de la pièce de formage (6) est compressée au moins dans certaines parties.
